# EUROPEAN PATENT APPLICATION

(11) **EP 4 364 920 A1**
(43) Date of publication of application: **08.05.2024**
(21) Application number: 22833297.9
(22) Date of filing: 30.06.2022
(51) Int. Cl.: B29C 45/10, B29C 45/40, B29C 49/06, B29C 49/64

(54) **RESIN CONTAINER MANUFACTURING DEVICE AND RESIN CONTAINER MANUFACTURING METHOD**

(30) Priority: 30.06.2021 JP 2021109598
(71) Applicant: Nissei ASB Machine Co., Ltd., Komoro-shi, Nagano 384-8585 (JP)
(72) Inventor: SAKURAI Atsushi, Komoro-shi, Nagano 384-8585 (JP)
(74) Representative: Mewburn Ellis LLP
(86) International application number: PCT/JP2022/026331
(87) International publication number: WO 2023/277151

(57) **Abstract**

An injection molding part (20) is configured to injection-mold a first number of bottomed resin preforms by using an injection molding mold (22) including an injection core mold and an injection cavity mold. A temperature adjustment part (30) includes a housing member (50) configured to receive the preforms demolded from the injection core mold (24) in a high-temperature state, and is configured to perform temperature adjustment on the preforms. A blow molding part (40) is configured to receive the preforms from the temperature adjustment part (30) and blow-mold the preforms into resin containers. The injection core mold (24) is configured to reciprocate between an injection molding position of the preforms and a demolding position of the preforms. The temperature adjustment part (30) is configured to perform the temperature adjustment by dividing the preforms housed in the housing member (50) into a third number of groups, each of which includes a second number of preforms smaller than the first number.

## Description

### TECHNICAL FIELD

The present disclosure relates to a device and a method for manufacturing resin containers.

### BACKGROUND ART

Patent Literature 1 discloses a two-stage blow molding apparatus and blow molding method for heating supplied preforms and blow-molding the preforms into heat-resistant containers.

### CITATION LIST

### PATENT LITERATURE

Patent Literature 1: WO2012/046620A1

### SUMMARY OF INVENTION

### TECHNICAL PROBLEM

In the blow molding method disclosed in Patent Literature 1, it is necessary to manufacture the preforms by the injection molding device in advance and store the preforms, which increases an initial cost and an installation area of the entire apparatus. Although it is desirable to integrate the injection molding device and the blow molding apparatus of the above literature, there is room for improving productivity by shortening a molding cycle of the injection molding device. In addition, it is desirable to use an apparatus that can contribute to reduction in environmental load, can manufacture a reusable plastic bottle (pet bottle) in relation to ESG and SDGs, and can save energy during production even when a disposable plastic bottle is manufactured.

It is required to provide a resin container manufacturing device and a resin container manufacturing method that can shorten a molding cycle time of a preform and improve the productivity of a resin container.

### SOLUTION TO PROBLEM

In one of exemplified aspects that can be provided by the present disclosure, a resin container manufacturing device includes: an injection molding part configured to injection-mold a first number of bottomed resin preforms by using an injection molding mold, the injection molding mold including an injection core mold and an injection cavity mold; a temperature adjustment part including a housing member configured to receive the preforms demolded from the injection core mold in a high-temperature state, the temperature adjustment part being configured to perform temperature adjustment on the preforms; and a blow molding part configured to receive the preforms from the temperature adjustment part and blow-mold the preforms into resin containers, in which: the injection core mold is configured to reciprocate between an injection molding position of the preforms and a demolding position of the preforms; and the temperature adjustment part is configured to perform the temperature adjustment by dividing the preforms housed in the housing member into a third number of groups, each of the third number of groups including a second number of preforms that is smaller than the first number.

In one of exemplified aspects that can be provided by the present disclosure, a resin container manufacturing method includes: an injection molding step of injection-molding a first number of bottomed resin preforms by using an injection molding mold, the injection molding mold including an injection core mold and an injection cavity mold; a step of moving the injection core mold from an injection molding position to a demolding position; a housing step of receiving, by a housing member, the preforms demolded from the injection core mold moved to the demolding position in a high-temperature state; a temperature adjustment step of performing temperature adjustment by dividing the preforms housed in the housing member into a third number of groups, each of the third number of groups including a second number of preforms that is smaller than the first number; and a blow molding step of receiving the preforms from the temperature adjustment part and blow-molding the preforms into resin containers.

According to the configurations of the exemplified aspects described above, since the preforms are demolded from the injection core mold at a demolding position different from the injection molding position, there is no need to ensure a mold opening distance for allowing the housing member to enter the injection molding mold. Accordingly, since the mold opening distance can be shortened, a molding cycle time can be shortened. In addition, since the preforms are received by the housing member at the demolding position different from the injection molding position, a movement time to the demolding position can be used for cooling the preforms, and the injection molding of the following preforms can be started while the demolding is performed. Accordingly, the molding cycle time is further shortened. Meanwhile, since the temperature adjustment part performs the temperature adjustment by dividing the preforms housed in the housing member into the third number of groups, each of which includes the second number of injection-molded preforms smaller than the first number, an appropriate temperature distribution can be imparted to the preforms depending on a batch of the preforms conveyed to the blow molding part or a waiting time until the preforms are started to be blow-molded (depending on the degree of reduction in residual heat of the preforms derived from the injection molding). Further, since the heat originally possessed by the preforms derived from the injection molding can be to the fullest and the cooling or the temperature adjustment on the preforms can be kept to the minimum necessary depending on situations of the preforms (sizes of waiting time and the like).

### BRIEF DESCRIPTION OF DRAWINGS

[FIG. 1] FIG. 1 is a plan view illustrating a configuration of a resin container manufacturing device according to a first embodiment.
[FIG. 2] FIG. 2 is a side view illustrating the configuration of the manufacturing device in FIG. 1.
[FIG. 3] FIG. 3 illustrates a configuration of an injection molding part of the manufacturing device in FIG. 1.
[FIG. 4] FIG. 4 illustrates a reference example for explaining advantages of the manufacturing device in FIG. 1.
[FIG. 5] FIG. 5 illustrates a flow of a resin container manufacturing method by the manufacturing device in FIG. 1.
[FIG. 6] FIG. 6 is a plan view illustrating a configuration of a resin container manufacturing device according to a second embodiment.
[FIG. 7] FIG. 7 is a side view illustrating the configuration of the manufacturing device in FIG. 6.
[FIG. 8] FIG. 8 illustrates a flow of a resin container manufacturing method by the manufacturing device in FIG. 6.
[FIG. 9] FIG. 9 illustrates a configuration of a first temperature adjustment part in the manufacturing devices in FIGS. 1 and 6.
[FIG. 10] FIG. 10 illustrates an operation of the first temperature adjustment part in FIG. 9.

### DESCRIPTION OF EMBODIMENTS

Embodiments will be described in detail below with reference to the accompanying drawings. In the drawings used in the following description, the scale is changed as necessary to make each member recognizable.

### First Embodiment

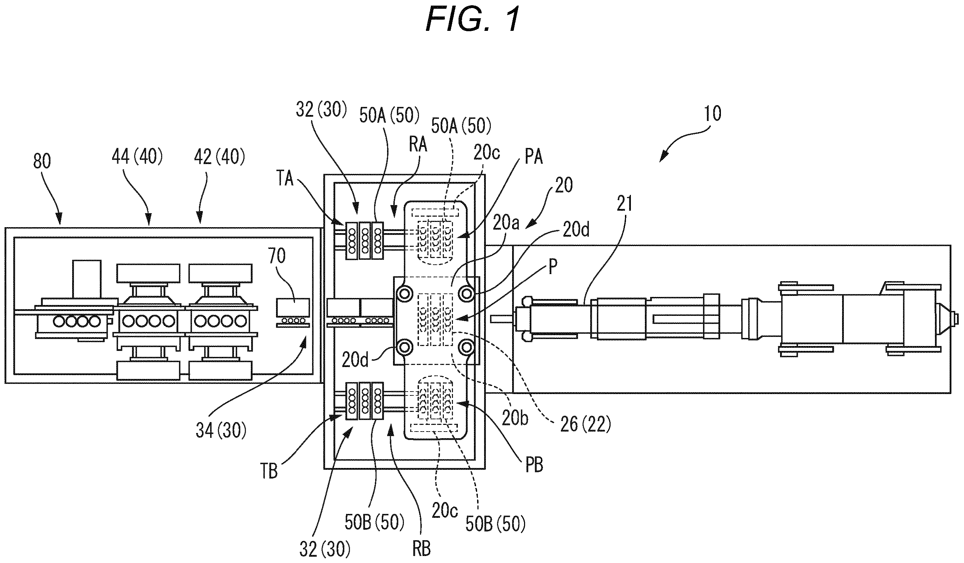

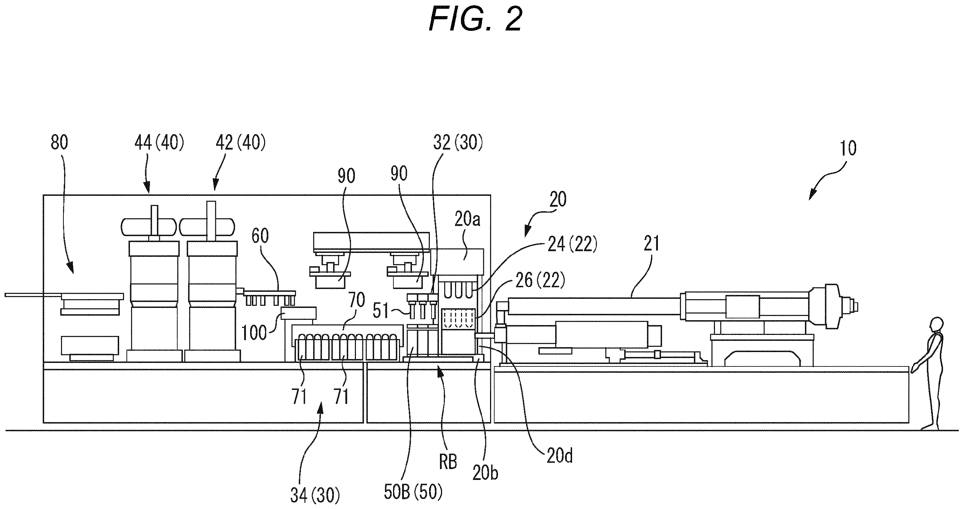

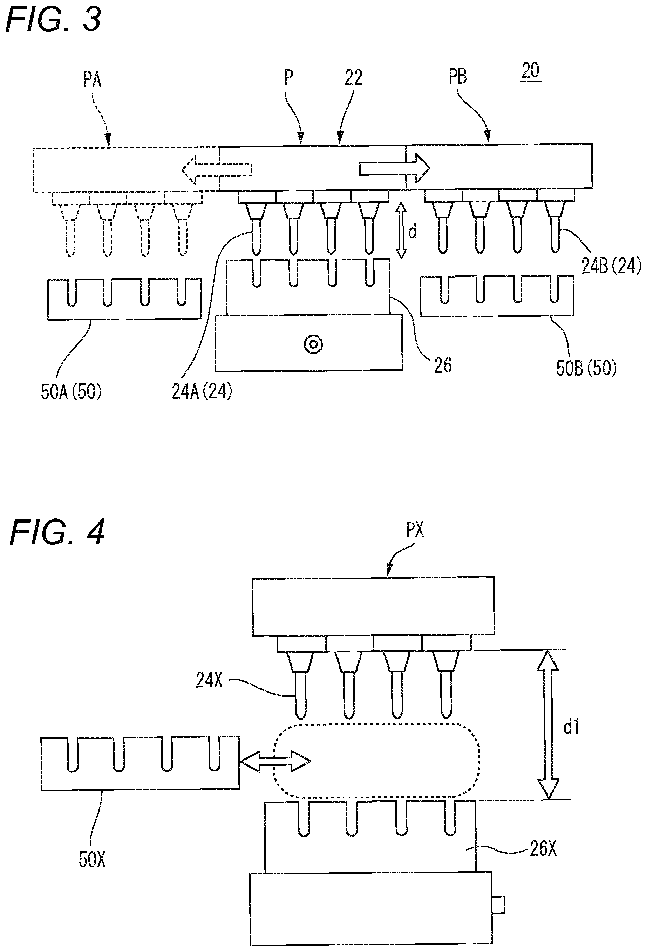

FIG. 1 is a plan view schematically illustrating a configuration of a resin container manufacturing device 10 according to a first embodiment. FIG. 2 is a side view schematically illustrating the configuration of the manufacturing device 10. FIG. 3 schematically illustrates an aspect of an injection molding part 20 included in the manufacturing device 10.

As illustrated in FIGS. 1 and 2, the manufacturing device 10 is a hot parison type blow molding apparatus and includes the injection molding part 20, a temperature adjustment part 30, and a blow molding part 40. The injection molding part 20 is configured to injection-mold a bottomed resin preform. The temperature adjustment part 30 is configured to perform temperature adjustment on the injection-molded preform. The blow molding part 40 is configured to blow-mold a resin container from the preform subjected to the temperature adjustment after the injection molding.

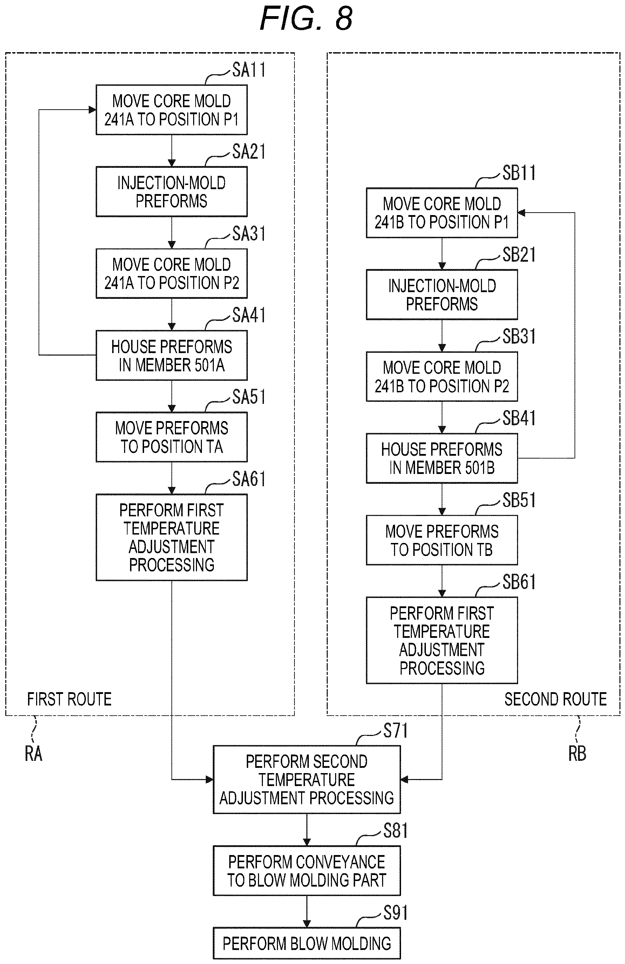

The manufacturing device 10 can manufacture, for example, a resin container with a narrow-mouth and a thick-wall and having a size in a range from a medium size to a large size. A resin material may be a crystalline or non-crystalline thermoplastic resin, such as polyethylene terephthalate (PET). The resin container can be either disposable (one-way type) or reusable. In the case of a reusable resin container, for example, the resin container is heat resistant and is reusable by washing with alkaline hot water (for example, hot water with a temperature of 60°C to 70°C and a NaOH weight percent concentration of 1% to 2%), and having, for example, an outer diameter of a mouth being set to 28 mm to 38 mm, the capacity being set to 2.0 L to 3.0 L, and the body portion thickness being set to 0.30 mm to 0.80 mm. In the resin container described above, it is desirable that the thickness of a bottom portion is set to, for example, 0.5 mm to 2.0 mm to make the bottom portion thicker than the body portion, thereby preventing the shrinkage deformation of the bottom portion at a time of reuse (after cleaning) and ensuring the grounding stability of the resin container at the time of reuse. The preform has the same material and outer diameter of the mouth as those of the resin container, having, for example, the body portion thickness being set to 3.0 mm to 8.0 mm and an amount of resin being set to 60 g to 120 g. Shapes of the preform and the resin container are disclosed in, for example, FIG. 8 in JP1962619B.

The injection molding part 20 includes an injection device 21 and an injection molding mold 22. The injection device 21 injects the resin material into the injection molding mold 22. The injection device 21 is an in-line screw type or pre-plunger type injection device.

As illustrated in FIGS. 2 and 3, the injection molding mold 22 includes an injection core mold 24 and an injection cavity mold 26. The injection core mold 24 includes a first injection core mold 24A and a second injection core mold 24B. A first neck mold and a second neck mold (not illustrated), each of which includes a pair of split molds and is configured to be openable and closable, are provided on outer peripheries of the first injection core mold 24A and the second injection core mold 24B, respectively.

The first injection core mold 24A and the second injection core mold 24B are alternately combined with the injection cavity mold 26 at a common injection molding position P. The first injection core mold 24A can reciprocate between the injection molding position P and a first demolding position PA. The second injection core mold 24B can reciprocate between the injection molding position P and a second demolding position PB.

The injection molding part 20 is configured to simultaneously injection-mold M × N preforms (3 × 4 preforms in the illustrated example). M is the number of columns of the injection cavity mold 26 extending in a direction orthogonal to a resin injection direction of the injection device 21, and corresponds to the number of groups (the number of times when the injection-molded preforms are divided and transferred to subsequent processes) when the preforms are transferred to processes after that in the injection molding part 20. N is the number of preforms that are blow-molded simultaneously or the number of batches (the number of preforms) when the preforms are transferred to the processes after that in the injection molding part 20. M × N is an example of a first number. N is an example of a second number. M is an example of a third number.

As illustrated in FIGS. 1 and 2, the injection molding part 20 includes an upper base 20a, a lower base 20b, and driving mechanisms 20c. The driving mechanism 20c includes a mechanism for implementing the reciprocating movement of the injection core mold 24 described above.

Two sets of the injection core molds 24 are provided at a lower portion of the upper base 20a, and are directly or indirectly connected to the driving mechanisms 20c. The injection cavity mold 26 is supported by the lower base 20b. The driving mechanism 20c includes an elevating mechanism (not illustrated) of the upper base 20a. When the elevating mechanism is driven, the upper base 20a moves up and down with respect to the lower base 20b along guide members (guide rods or tie bars) 20d. When the upper base 20a is raised, the injection core mold 24 and the injection cavity mold 26 are open. When the upper base 20a is lowered, the injection core mold 24 and the injection cavity mold 26 are closed.

A time required for injection-molding the preform using the injection molding mold 22 is defined to include a time (filling time) for injecting and filling the resin material into the injection molding mold 22 by the injection device 21 and a time (cooling time) for cooling the resin material to a predetermined temperature after the injecting and filling the resin material is completed. In the present embodiment, the cooling time is set to be 1/2 or less of the filling time.

The temperature adjustment part 30 includes a first temperature adjustment part 32. The first temperature adjustment part 32 is configured to perform the temperature adjustment on the preforms injection-molded by the injection molding part 20. The temperature adjustment is performed to reduce or eliminate presence of crystallization (cloudiness) associated with slow cooling of the preforms, an inappropriate high temperature or deviation in temperature (temperature unevenness) during the blow molding, and the like. The temperature of the preforms after the temperature adjustment is lower than that at the time of injection molding by being adjusted by the first temperature adjustment part 32, and the preforms have an enough amount of heat (residual heat) derived from the injection molding to enable the blow molding.

The first temperature adjustment part 32 includes a housing member (temperature adjustment pot member) 50. The housing member 50 includes a first housing member 50A and a second housing member 50B. The first housing member 50A is configured to receive, at the first demolding position PA, the preforms demolded from the first injection core mold 24A (an operation of opening the neck mold and releasing the neck portion of the preform that is supported by the neck mold) in a high-temperature state. The second housing member 50B is configured to receive, at the second demolding position PB, the preforms demolded from the second injection core mold 24B in a high-temperature state. The preforms demolded from the injection core mold 24 in a high-temperature state have a temperature immediately after the demolding (for example, within 1 second after the demolding), for example, an outer surface temperature of the body portion of 115°C or higher, preferably 120°C or higher (35°C or higher, preferably 40°C or higher than a glass transition temperature Tg of the resin material).

The first housing member 50A is capable of reciprocating in a horizontal direction between the first demolding position PA and a first transfer position TA along a linear guide rail provided on a first route RA. The first transfer position TA is a position at which transfer of the preforms from the first housing member 50A to a blow molding part 40 side is started. The second housing member 50B is capable of reciprocating in the horizontal direction between the second demolding position PB and a second transfer position TB along a linear guide rail provided on a second route RB. The second transfer position TB is a position at which transfer of the preforms from the second housing member 50B to the blow molding part 40 side is started. The first transfer position TA and the second transfer position TB are positions at which the temperature adjustment is performed on the demolded preforms.

The housing member 50 includes M × N pots, and each of the M × N pots has a shape following an outer shape of the preform. The N pots are unitized, and the housing member 50 includes M pot units. A temperature adjustment medium such as cooling water or hot water set at a predetermined temperature flows inside each pot of the housing member 50. The temperature of each pot of the housing member 50 is set to, for example, 10°C to 80°C, preferably 40°C to 70°C. The preform housed in each pot comes into contact with an inner peripheral surface (housing surface) of the pot, and is subjected to the temperature adjustment from an outside by the temperature adjustment medium (the temperature of the preform is lowered with respect to that at the time of demolding and the preform is relatively cooled). The temperature of each pot can be set differently in an up-down direction of the preform. The housing member 50 has a configuration in which each of the M (for example, three) pot units simultaneously housing the N preforms are arranged in parallel in a direction orthogonal to an arrangement direction of the N pots.

The first temperature adjustment part 32 includes 2 × M temperature adjustment core units (M first temperature adjustment core units used in the first housing member 50A and M second temperature adjustment core units used in the second housing member 50B). In each of the first transfer position TA and the second transfer position TB, the M temperature adjustment core units are arranged in parallel along the direction in which the M pot units in the housing member 50 are arranged in parallel. Each temperature adjustment core unit includes N temperature adjustment core members 51. The temperature adjustment core members 51 provided at the first transfer position TA are configured to adjust the temperatures of the preforms housed in the pots of the first housing member 50A conveyed to the first transfer position TA from an inside. That is, the M × N temperature adjustment core members 51 at the first transfer position TA are disposed to correspond to the pots of the first housing member 50A in a one-to-one manner. The temperature adjustment core members 51 provided at the second transfer position TB are configured to adjust the temperatures of the preforms housed in the pots of the second housing member 50B conveyed to the second transfer position TB from an inside. That is, the M × N temperature adjustment core members 51 at the second transfer position TB are disposed to correspond to the pots of the second housing member 50B in a one-to-one manner.

Each of the temperature adjustment core members 51 may be a member that is fitted to the neck portion of the preform and allows air to flow therein, or may be a member that comes into contact with an inner wall of the preform. In the case of a member that allows air to flow, air is introduced into the preform to apply internal pressure, thereby bringing an outer surface of the preform into contact with the pot. Then, the preform is cooled from the inside by convection of air in a state in which the internal pressure is applied by air. That is, the air introduced into the preform absorbs heat from the preform, and the air having a temperature higher than that at the time of flowing in is discharged to an outside of the preform. It is preferable that cooling intensity for the preform is higher in the temperature adjustment core member 51 than in the housing member 50.

Processing (operation) of the temperature adjustment by the temperature adjustment core members 51 may be performed at the same timing for all of the M columns, or may be performed at different timings for each of the M columns. For example, to prevent excessive reduction in residual heat, the temperature adjustment can be performed such that the N preforms that are last subjected to the blow molding are relatively higher in temperature or higher in residual heat than the N preforms that are first subjected to the blow molding. That is, a timing of cooling the preforms by the temperature adjustment core members 51 may be shifted in units of M columns (units of core units, units of N preforms). For example, N preforms conveyed first to the blow molding part 40 may be cooled first, N preforms conveyed next may be cooled with a delay, and N preforms conveyed last may be cooled with a maximum delay. A processing time of the temperature adjustment (cooling) by the temperature adjustment core member 51 may be the same for all of the M columns, or may be different for each of the M columns (for each core unit, for each N preforms).

Processing (operation) of the temperature adjustment by the housing member 50 may be performed with the same temperature setting for all of the M columns, or may be performed with different temperature settings for each of the M columns. In the case of the same temperature setting, timings of the preforms to be brought into contact with the pots of the housing member 50 are made different in units of M columns (units of pot units, units of N preforms). For example, the excessive reduction in residual heat is prevented by bringing the N preforms conveyed last into contact with the pots with a delay. In the case of different temperature sets for each of the M columns, setting temperatures are made different in units of M columns (units of pot units, units of N preforms), and for example, a temperature of a pot unit of the last conveyed N preforms is set to be relatively higher than those of the other pot units. A processing time of the temperature adjustment (cooling) by the housing member 50 may be the same for all of the M columns, or may be different for each of the M columns (for each pot unit and for each N preforms).

A preferred embodiment of the first temperature adjustment part 32 is as follows. The temperature adjustment processing for the preforms received by the housing member 50 is performed in stages by shifting timings of performing the temperature adjustment (cooling) in M times for respective units of N preforms from inside and outside by using respective pot units of the housing member 50 and respective core units provided with the temperature adjustment core members 51. At this time, it is desirable to set all the pot units to the same temperature condition. Further, it is preferable that a time at which the N preforms are brought into contact with the pot units is the same.

The temperature adjustment part 30 includes a second temperature adjustment part 34. The second temperature adjustment part 34 is configured to impart a temperature distribution more suitable for the blow molding to the preforms subjected to the temperature adjustment by the first temperature adjustment part 32.

The manufacturing device 10 includes a conveyance member 90. The conveyance member 90 is configured to sequentially convey the M × N preforms housed in the housing member 50 to the second temperature adjustment part 34 in M times for respective units of N preforms. In the present example, the 12 preforms are conveyed in 3 times for respective units of 4 preforms. Specifically, the conveyance member 90 is configured to change the arrangement direction of the N preforms by 90° in a horizontal plane and change a posture of each of the preforms to be vertically reversed. Therefore, each of the preforms is conveyed by the conveyance member 90 with the neck portion facing downward and the bottom portion facing upward.

When the preforms are conveyed to the second temperature adjustment part 34 by the conveyance member 90, a position of the housing member 50 may be changed to be closer to the second temperature adjustment part 34 than the first transfer position TA and the second transfer position TB.

The second temperature adjustment part 34 includes a plurality of (N or more, preferably N × M or more) holder members 71. The conveyance member 90 can optionally transfer the preforms to the holder members 71. Each holder member 71 supports the transferred preform in a posture during the conveyance. Each holder member 71 is rotatable and is movable toward the blow molding part 40. Further, each holder member 71 may be used as a region (buffer) in which the preform subjected to the temperature adjustment is kept on standby before being conveyed to the blow molding part 40.

The second temperature adjustment part 34 includes a heating member 70. The heating member 70 performs adjustment such that the preform has the temperature distribution suitable for the blow molding by heating the preform that is rotated and conveyed by each holder member 71. The temperature adjustment can be performed by various methods such as an infrared heater method, a RED method, and an electromagnetic wave heating method.

The manufacturing device 10 includes a conveyance member 100. The conveyance member 100 is configured to convey the N preforms from the second temperature adjustment part 34 to the blow molding part 40. Specifically, the conveyance member 100 is configured to change the posture of each preform to be vertically reversed. Therefore, each of the preforms is conveyed by the conveyance member 100 with the neck portion facing upward and the bottom portion facing downward. The conveyance member 100 is configured to transfer the N preforms subjected to the temperature adjustment by the second temperature adjustment part 34 to a conveyance member 60 of the blow molding part 40.

In a case in which the number of the holder members 71 is as small as N, after N preforms are transferred to the conveyance member 60 by the conveyance member 100, N preforms to be subjected to the temperature adjustment by the second temperature adjustment part 34 next may be conveyed from the first temperature adjustment part 32 by the conveyance member 90.

The blow molding part 40 is compatible with both a case in which the blow molding is performed once on the preforms conveyed by the conveyance member 60 to manufacture the resin containers and a case in which the blow molding is performed twice on the preforms to manufacture the resin containers. FIG. 1 illustrates a mode in which the blow molding is performed twice. Specifically, the blow molding part 40 includes a first blow molding part 42 and a second blow molding part 44. The first blow molding part 42 is configured to blow-mold intermediate molded products from the preforms. The second blow molding part 44 is configured to blow-mold the resin containers from the intermediate molded products.

The first blow molding part 42 includes a heat treatment mold having less unevenness on a cavity surface. The first blow molding part 42 blow-molds the intermediate molded products each having a size equal to or larger than that of the resin container, performs heat set processing for increasing the crystallization density of the resin, and causes the intermediate molded products to contract by exhaust gas to remove residual stress. The second blow molding part 44 includes a blow mold having a cavity surface corresponding to a container shape. The second blow molding part 44 forms the intermediate molded products into the resin containers, and then cools the resin containers to a predetermined temperature.

The blow molding part 40 is configured to blow-mold N (four in the illustrated example) resin containers simultaneously. The blow-molded resin containers are taken out from a take-out part 80 located downstream of the blow molding part 40.

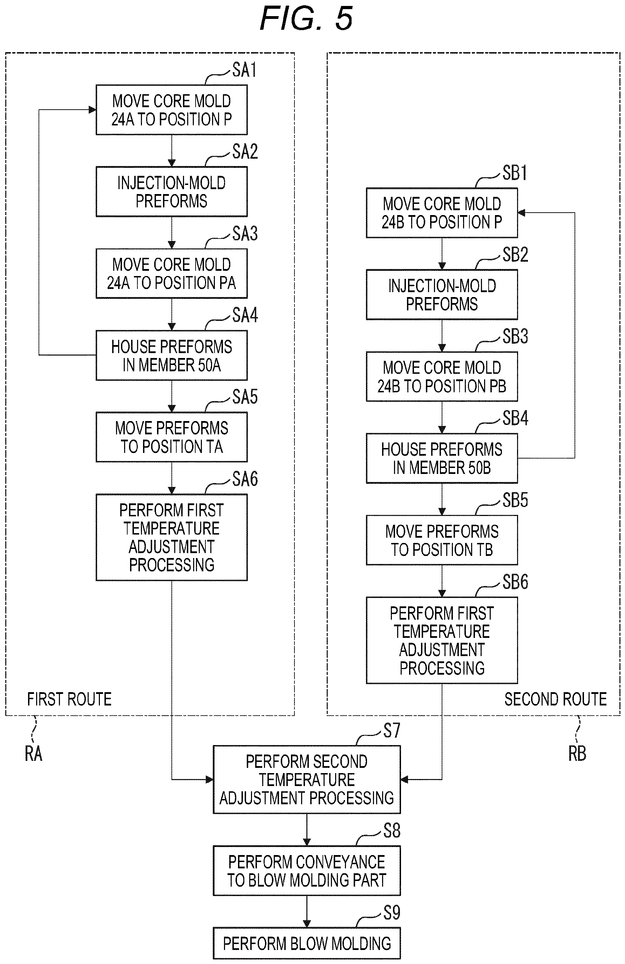

FIG. 5 illustrates a flow of a resin container manufacturing method using the manufacturing device 10. The first route RA illustrates a flow in which the first injection core mold 24A and the injection cavity mold 26 are combined to form the preforms and the first housing member 50A housing the preforms is conveyed to the blow molding part 40. The second route RB illustrates a flow in which the second injection core mold 24B and the injection cavity mold 26 are combined to form the preforms and the second housing member 50B housing the preforms is conveyed to the blow molding part 40. FIG. 5 illustrates that two processes arranged in a left-right direction are executed in parallel.

In the first route RA, first, the first injection core mold 24A is moved to the injection molding position P (step SA1). Subsequently, at the injection molding position P, the preforms are injection-molded by the first injection core mold 24A and the injection cavity mold 26 (step SA2).

Subsequently, the first injection core mold 24A is opened and is moved from the injection molding position P to the first demolding position PA (step SA3). Meanwhile, in the second route RB, the second injection core mold 24B is moved to the injection molding position P (step SB1).

Subsequently, in the first route RA, the preforms demolded from the first injection core mold 24A are housed in the first housing member 50A in a non-contact state with the pots (step SA4). Meanwhile, in the second route RB, the preforms are injection-molded by the second injection core mold 24B and the injection cavity mold 26 at the injection molding position P (step SB2).

Subsequently, in the first route RA, the first housing member 50A housing the preforms is moved from the first demolding position PA to the first transfer position TA (step SA5). Before step SA5 is completed, the first injection core mold 24A from which the preforms are demolded returns to the injection molding position P (step SA1). Meanwhile, in the second route RB, the second injection core mold 24B is moved from the injection molding position P to the second demolding position PB (step SB3).

Subsequently, in the first route RA, the first temperature adjustment part 32 performs first temperature adjustment processing on the preforms disposed at the first transfer position TA (step SA6). At this time, in the first route RA, molding of the following preforms is started. Meanwhile, in the second route RB, the preforms demolded from the second injection core mold 24B are housed in the second housing member 50B (step SB4). Thereafter, the second housing member 50B housing the preforms is moved from the second demolding position PB to the second transfer position TB (step SB5). Before step SB5 is completed, the second injection core mold 24B from which the preforms are demolded returns to the injection molding position P (step SB1).

When the first temperature adjustment processing on the preforms disposed at the first transfer position TA is completed, the preforms are conveyed in M times for respective units of N preforms from the first housing member 50A to the second temperature adjustment part 34 or the holder members 71 by the conveyance member 90. Further, the following injection-molded preforms are moved from the injection molding position P to the first demolding position PA. In the second route RB, the first temperature adjustment part 32 performs the first temperature adjustment processing on the preforms disposed at the second transfer position TB (step SB6). At this time, in the second route RB, a molding cycle of the following preforms is started. When the first temperature adjustment processing on the preforms disposed at the second transfer position TB is completed, the preforms are conveyed from the second housing member 50B to the second temperature adjustment part 34 by the conveyance member 90.

Second temperature adjustment processing (step S7) performed by the second temperature adjustment part 34 on the preforms conveyed from the first housing member 50A may be started after all the preforms are conveyed from the first housing member 50A, or may be started sequentially for the preforms conveyed to the second temperature adjustment part 34. Similarly, the second temperature adjustment processing (step S7) performed by the second temperature adjustment part 34 on the preforms conveyed from the second housing member 50B may be started after all the preforms are conveyed from the second housing member 50B, or may be started sequentially for the preforms conveyed to the second temperature adjustment part 34. The second temperature adjustment processing in step S7 may be omitted.

Thereafter, for example, N preforms are conveyed from the second temperature adjustment part 34 to the blow molding part 40 every time by the conveyance member 100 (step S8), and the blow molding of the resin containers is performed in the blow molding part 40 (step S9).

### Second Embodiment

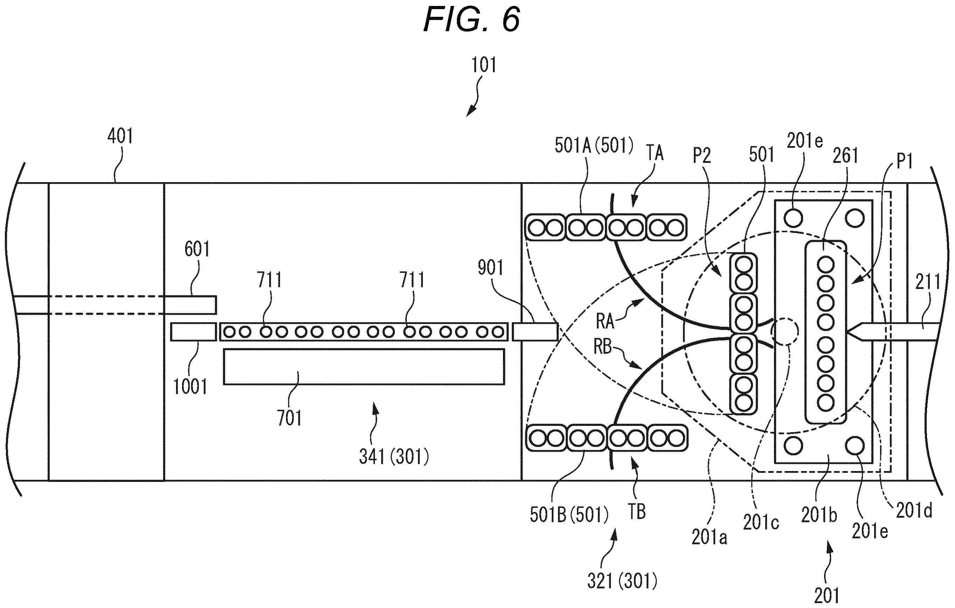

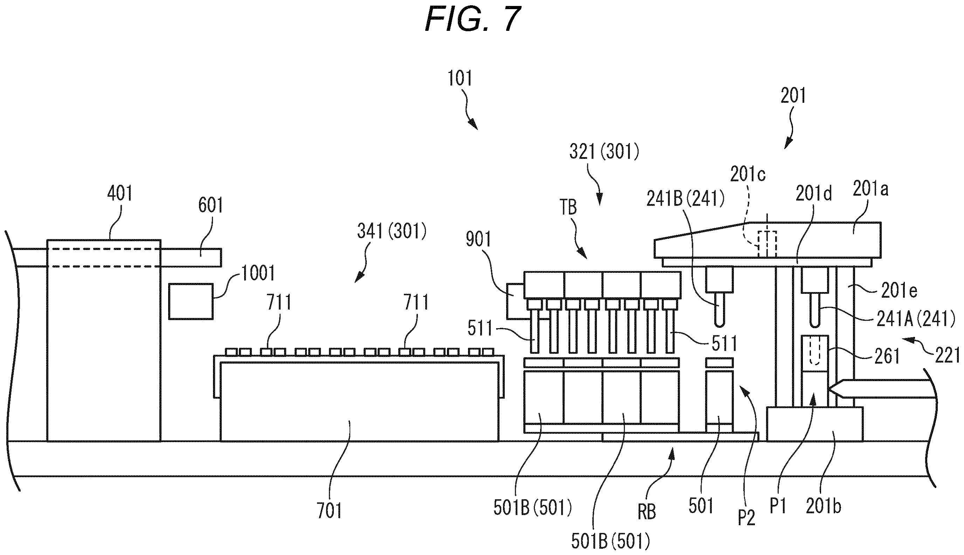

FIG. 6 is a plan view schematically illustrating a configuration of a resin container manufacturing device 101 according to a second embodiment. FIG. 7 is a side view schematically illustrating the configuration of the manufacturing device 101.

The manufacturing device 101 is a hot parison type blow molding apparatus and includes an injection molding part 201, a temperature adjustment part 301, and a blow molding part 401. The injection molding part 201 is configured to injection-mold a bottomed resin preform. The temperature adjustment part 301 is configured to perform temperature adjustment on the injection-molded preform. The blow molding part 401 is configured to blow-mold a resin container from the injection-molded preform.

Specifications of the resin container that can be manufactured by the manufacturing device 101 are substantially the same as those of the manufacturing device 10, and repeated description thereof will be omitted.

The injection molding part 201 includes an injection device 211 and an injection molding mold 221. The injection device 211 injects a resin material into the injection molding mold 221. The injection device 211 is an in-line screw type or pre-plunger type injection device.

The injection molding mold 221 includes at least one injection core mold 241 and an injection cavity mold 261. The injection core mold 241 includes a first injection core mold 241A and a second injection core mold 241B. A first neck mold and a second neck mold (not illustrated), each of which includes a pair of split molds and is configured to be openable and closable, are provided on outer peripheries of the first injection core mold 241A and the second injection core mold 241B, respectively.

The first injection core mold 241A and the second injection core mold 241B are alternately combined with the injection cavity mold 261 at a common injection molding position P1. The first injection core mold 241A and the second injection core mold 241B are capable of reciprocating between the injection molding position P1 and a demolding position P2.

The injection molding part 201 is configured to simultaneously injection-mold N1 (for example, eight) preforms arranged in at least one column. The number of columns of the preforms that are simultaneously injection-molded may be two or more. As will be described later, the N1 preforms are divided into N3 (for example, four) groups each including N2 (for example, two) preforms, and are conveyed to a first temperature adjustment part 321 and the blow molding part 401. That is, N2 is the number of batches (the number of preforms) when the preforms are transferred to processes after that in the injection molding part 201. N3 is the number of groups when the N2 preforms are transferred to the processes after that in the injection molding part 201 (the number of times when the preforms are divided into N2 preforms and conveyed to the subsequent processes). N1 is an example of a first number. N2 is an example of a second number. N3 is an example of a third number.

The injection molding part 201 includes an upper base 201a, a lower base 201b, a driving mechanism 201c, and a rotating plate 201d. The rotating plate 201d is provided at a lower portion of the upper base 201a and is directly or indirectly connected to the driving mechanism 201c. The first injection core mold 241A and the second injection core mold 241B are supported by the rotating plate 201d. The injection cavity mold 261 is supported by the lower base 201b.

The driving mechanism 201c is configured to alternately dispose the first injection core mold 241A and the second injection core mold 241B at the injection molding position P1 by causing the rotating plate 201d to rotate. In other words, when one of the first injection core mold 241A and the second injection core mold 241B is disposed at the injection molding position P1, the other is disposed at the demolding position P2. In the manufacturing device 101 according to the second embodiment, positions of the preforms molded by the first injection core mold 241A or the second injection core mold 241B and conveyed are the same demolding position P2 and are common.

The driving mechanism 201c also includes an elevating mechanism (not illustrated) of the upper base 201a. When the elevating mechanism is driven, the upper base 201a moves up and down with respect to the lower base 201b along guide members (guide rods or tie bars) 201e. When the upper base 201a is raised, the injection core mold 241 and the injection cavity mold 261 are open. When the upper base 201a is lowered, the injection core mold 241 and the injection cavity mold 261 are closed.

The temperature adjustment part 301 includes the first temperature adjustment part 321. The first temperature adjustment part 321 is configured to perform temperature adjustment on the preforms injection-molded in the injection molding part 201. Since a function of the first temperature adjustment part 321 is substantially the same as that of the first temperature adjustment part 32, repeated description will be omitted.

The first temperature adjustment part 321 includes a housing member 501. The housing member 501 includes a first housing member 501A and a second housing member 501B. The first housing member 501A is configured to receive, at the demolding position P2, the preforms demolded from the first injection core mold 241A in a high-temperature state. The second housing member 501B is configured to receive, at the demolding position P2, the preforms demolded from the second injection core mold 241B in a high-temperature state.

The first housing member 501A is capable of reciprocating in the horizontal direction between the demolding position P2 and the first transfer position TA along an arc-shaped guide rail provided in the first route RA. The first transfer position TA is a position at which transfer of the preforms from the first housing members 501A to the blow molding part 401 is started. The second housing member 501B is capable of reciprocating in the horizontal direction between the demolding position P2 and the second transfer position TB along an arc-shaped guide rail provided in the second route RB. The second transfer position TB is a position at which transfer of the preforms from the second housing members 501B to the blow molding part 401 is started. When the housing member 501 is moved between the demolding position P2 and the first transfer position TA or the second transfer position TB, the housing member 501 is rotated by 90° in the horizontal plane.

The housing member 501 includes N1 pots each having a shape following an outer shape of the preform. The housing member 501 includes N3 (for example, four) pot units each having N2 (for example, two) pots. The N3 pot units are arranged in parallel along an arrangement direction of the N2 pots. A temperature adjustment medium such as cooling water or hot water set at a predetermined temperature flows inside each pot of the housing member 501. The temperature of each pot of the housing member 501 is set to, for example, 10°C to 80°C, preferably 40°C to 70°C. The preform housed in each pot comes into contact with an inner peripheral surface (housing surface) of the pot, and is subjected to the temperature adjustment from an outside by the temperature adjustment medium (the temperature of the preform is lowered with respect to that in the time of demolding and the preform is relatively cooled). The temperature of each pot can be set differently in the up-down direction of the preform.

The first temperature adjustment part 321 includes 2 × N3 temperature adjustment core units (N3 first temperature adjustment core units used in the first housing member 501A and N3 second temperature adjustment core units used in the second housing member 501B). In each of the first transfer position TA and the second transfer position TB, the N3 temperature adjustment core units are arranged in parallel along the direction in which the N3 pot units in the housing member 501 are arranged in parallel. Each temperature adjustment core unit includes N2 temperature adjustment core members 511. The temperature adjustment core members 511 provided at the first transfer position TA are configured to adjust the temperatures of the preforms housed in the pots of the first housing member 501A conveyed to the first transfer position TA from an inside. That is, the N2 × N3 temperature adjustment core members 511 at the first transfer position TA are disposed to correspond to the pots of the first housing member 501A in a one-to-one manner. The temperature adjustment core members 511 provided at the second transfer position TB are configured to adjust the temperatures of the preforms housed in the pots of the second housing member 501B conveyed to the second transfer position TB from an inside. That is, the N2 × N3 temperature adjustment core members 511 at the second transfer position TB are disposed to correspond to the pots of the second housing member 501B in a one-to-one manner.

Since a configuration of the temperature adjustment core member 511 is substantially the same as that of the temperature adjustment core member 51, repeated description will be omitted. The temperature adjustment by the temperature adjustment core members 511 can be performed at different setting temperatures for each N2 pots. For example, to prevent excessive reduction in residual heat, the temperature adjustment can be performed such that the N2 preforms that are last subjected to the blow molding are relatively higher in temperature or higher in residual heat than the N2 preforms that are first subjected to the blow molding.

Since processing (operation) of the temperature adjustment core members 511, processing (operation) of the temperature adjustment of the housing member 501, and a preferred embodiment of the first temperature adjustment part 321 are the same as those of the first embodiment, description thereof will be omitted.

The temperature adjustment part 301 includes a second temperature adjustment part 341. The second temperature adjustment part 341 is configured to impart a temperature distribution more suitable for the blow molding to the preforms subjected to the temperature adjustment by the first temperature adjustment part 321.

The manufacturing device 101 includes a conveyance member 901. The conveyance member 901 is configured to sequentially convey the N1 preforms housed in the housing member 501 to the second temperature adjustment part 341 in N3 times for respective units of N2 preforms. In the present example, 8 preforms are conveyed in 4 times for respective units of 2 preforms. Specifically, the conveyance member 901 is configured to convey the preforms while maintaining postures of the preforms. That is, each of the preforms is conveyed by the conveyance member 901 with the neck portion facing upward and the bottom portion facing downward.

When the preforms are conveyed to the second temperature adjustment part 341 by the conveyance member 901, a position of the housing member 501 may be changed to be closer to the second temperature adjustment part 341 than the first transfer position TA and the second transfer position TB.

The second temperature adjustment part 341 includes a plurality of (N2 or more, preferably N1 or more) holder members 711. The conveyance member 901 can optionally transfer the preforms to the holder members 711. Each holder member 711 supports the transferred preform in a posture during the conveyance. Each holder member 711 is rotatable and is movable toward the blow molding part 401. Further, each holder member 711 may be used as a region (buffer) in which the preform subjected to the temperature adjustment is kept on standby before being conveyed to the blow molding part 401.

The second temperature adjustment part 341 includes a heating member 701. The heating member 701 performs adjustment such that the preform has the temperature distribution suitable for the blow molding by heating the preform that is rotated and conveyed by each holder member 711. The temperature adjustment can be performed by various methods such as an infrared heater method, a RED method, and an electromagnetic wave heating method.

The manufacturing device 101 includes a conveyance member 1001. The conveyance member 1001 is configured to convey the N2 preforms from the second temperature adjustment part 341 to the blow molding part 401. Specifically, the conveyance member 1001 is configured to convey the preforms while maintaining postures of the preforms. That is, each of the preforms are conveyed by the conveyance member 1001 with the neck portion facing upward and the bottom portion facing downward. The conveyance member 1001 is configured to transfer the N2 preforms subjected to the temperature adjustment by the second temperature adjustment part 341 to a conveyance member 601 of the blow molding part 401.

When the N2 preforms are transferred to the conveyance member 601 by the conveyance member 1001, the N2 preforms to be subjected to the temperature adjustment by the second temperature adjustment part 341 are sequentially conveyed from the first temperature adjustment part 321 by the conveyance member 901. A correlation between the number of preforms transferred from the first temperature adjustment part 321 to the second temperature adjustment part 341 and the number of preforms transferred from the second temperature adjustment part 341 to the blow molding part 401 can be appropriately determined.

A configuration and a function of the blow molding part 401 are substantially the same as those of the blow molding part 40, and repeated description will be omitted.

FIG. 8 illustrates a flow of a resin container manufacturing method using the manufacturing device 101. The first route RA illustrates a flow in which the first injection core mold 241A and the injection cavity mold 261 are combined to form the preforms and the first housing member 501A housing the preforms is conveyed to the blow molding part 401. The second route RB illustrates a flow in which the second injection core mold 241B and the injection cavity mold 261 are combined to form the preforms and the second housing member 501B housing the preforms is conveyed to the blow molding part 401. FIG. 5 illustrates that two processes arranged in a left-right direction are executed in parallel.

In the first route RA, first, the first injection core mold 241A is moved to the injection molding position P1 (step SA11). Subsequently, at the injection molding position P1, the preforms are injection-molded by the first injection core mold 241A and the injection cavity mold 261 (step SA21).

Subsequently, the first injection core mold 241A is moved from the injection molding position P1 to the demolding position P2 (step SA31). Meanwhile, in the second route RB, the second injection core mold 241B is moved to the injection molding position P1 (step SB11).

Subsequently, in the first route RA, the preforms demolded from the first injection core mold 241A are housed in the first housing member 501A (step SA41). Meanwhile, in the second route RB, the preforms are injection-molded by the second injection core mold 241B and the injection cavity mold 261 at the injection molding position P1 (step SB21).

Subsequently, in the first route RA, the first housing member 501A housing the preforms is moved from the demolding position P2 to the first transfer position TA (step SA51). Before step SA51 is completed, the first injection core mold 241A from which the preforms are demolded returns to the injection molding position P1 (step SA11). Meanwhile, in the second route RB, the second injection core mold 241B is moved from the injection molding position P1 to the demolding position P2 (step SB31).

Subsequently, in the first route RA, the first temperature adjustment part 321 performs first temperature adjustment processing on the preforms disposed at the first transfer position TA (step SA61). At this time, in the first route RA, molding of the following preforms is started. Meanwhile, in the second route RB, the preforms demolded from the second injection core mold 241B are housed in the second housing member 501B (step SB41). Thereafter, the second housing member 501B housing the preforms is moved from the second demolding position PB to the second transfer position TB (step SB51). Before step SB51 is completed, the second injection core mold 241B from which the preforms are demolded returns to the injection molding position P1 (step SB11).

When the first temperature adjustment processing on the preforms disposed at the first transfer position TA is completed, the preforms are conveyed, in N3 times for respective units of N2 preforms, from the first housing member 501A to the second temperature adjustment part 341 or the holder members 711 by the conveyance member 901. Further, the following injection-molded preforms are moved from the injection molding position P1 to the first demolding position PA. In the second route RB, the first temperature adjustment part 321 performs the first temperature adjustment processing on the preforms disposed at the second transfer position TB (step SB61). At this time, in the second route RB, a molding cycle of the following preforms is started. When the first temperature adjustment processing on the preforms disposed at the second transfer position TB is completed, the preforms are conveyed from the second housing member 501B to the second temperature adjustment part 341 by the conveyance member 901.

Second temperature adjustment processing (step S71) performed by the second temperature adjustment part 341 on the preforms conveyed from the first housing member 501A may be started after all the preforms are conveyed from the first housing member 501A, or may be started sequentially for the preforms conveyed to the second temperature adjustment part 341. Similarly, the second temperature adjustment processing (step S71) performed by the second temperature adjustment part 341 on the preforms conveyed from the second housing member 501B may be started after all the preforms are conveyed from the second housing member 501B, or may be started sequentially for the preforms conveyed to the second temperature adjustment part 341. The second temperature adjustment processing in step S71 may be omitted.

Thereafter, for example, N2 preforms are conveyed from the temperature adjustment part 301 to the blow molding part 401 every time by the conveyance member 1001 (step S81), and the blow molding of the resin containers is performed in the blow molding part 401 (step S91).

### Specific Configuration of First Temperature Adjustment Part

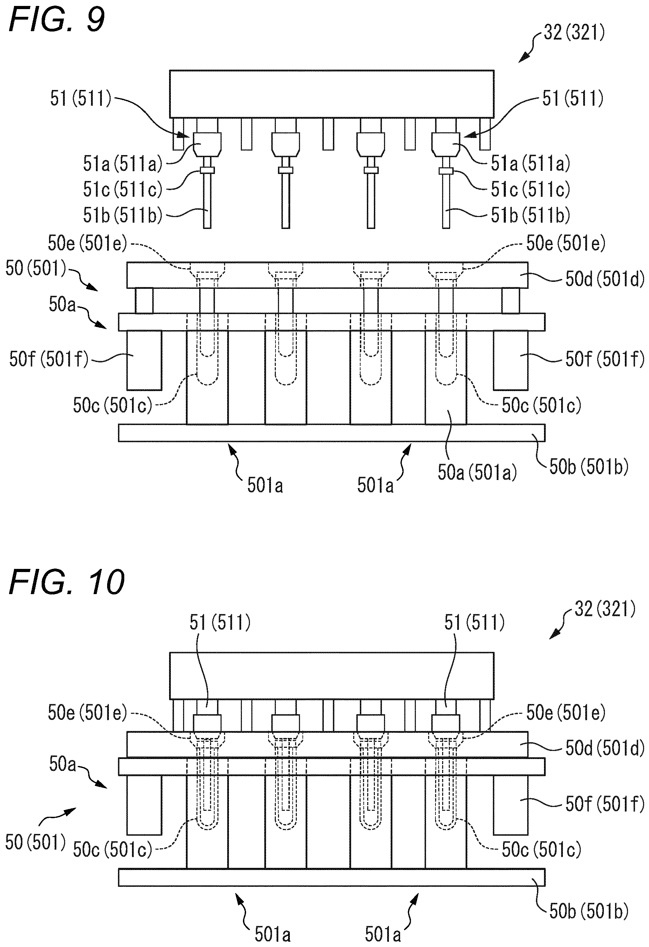

A specific configuration of the first temperature adjustment part 32 (321) will be described with reference to FIGS. 9 and 10. As described above, the housing member 50 of the first temperature adjustment part 32 according to the first embodiment includes three pot units. In FIGS. 9 and 10, one of the three pot units is denoted by reference numeral 50a. The housing member 501 of the first temperature adjustment part 321 according to the second embodiment includes four pot units. FIGS. 9 and 10, two of the four pot units are denoted by reference numeral 501a.

The housing member 50 (501) includes a pot fixing plate 50b (501b). Each pot unit 50a (501a) partitions a plurality of pots 50c (501c) in which preforms demolded from the injection core mold 24 (241) are housed. The pot fixing plate 50b (501b) supports and fixes the plurality of pot units 50a (501a). Accordingly, the housing member 50 (501) including the plurality of pot units 50a can be moved along the guide rail between the demolding position and the transfer position.

The housing member 50 (501) includes a preform support plate 50d (501d). The preform support plate 50d (501d) is disposed above the pot unit 50a (501a). Recesses 50e (501e) are formed in the preform support plate 50d (501d) at positions facing the pots 50c (501c). The recess 50e (501e) has a shape and a dimension capable of suspending the neck portion of the preform.

The housing member 50 (501) includes an elevating mechanism 50f (5011). The elevating mechanism 50f (501f) is configured to elevate the preform support plate 50d (SOld) with respect to the pot unit 50a (501a). The number of pot units 50a (501a) corresponding to the preform support plate 50d (SOld) simultaneously elevated by the elevating mechanism 50f (501f) may be set to an appropriate value which is one or more. In the illustrated example, one preform support plate 50d is assigned to one pot unit 50a, and one preform support plate 501d is assigned to two pot units 501a. Alternatively, the housing member 50 (501) may include a plurality of the preform support plates 50d (SOld) that can be individually elevated by a plurality of the elevating mechanisms 50f (5011). In this case, the number of pots 50c (501c) assigned to each preform support plate 50d (501d) may be set to at least one optional value.

The housing member 50 (501) is disposed at the demolding position of the injection molding part 20 (201) in a state in which the preform support plate 50d (501d) is raised by the elevating mechanism 50f (5011), and waits for the demolding of the preform from the injection core mold 24 (241). For example, when the injection core mold 24 (241) and the injection cavity mold 26 (261) at the injection molding position are closed, the neck mold provided on the outer periphery of the injection core mold 24 (241) at the demolding position is opened, and the preform is demolded. The neck portion of the preform dropped from the injection core mold 24 (241) due to the demolding is received by the recess 50e (501e). Accordingly, the preform is suspended by the preform support plate 50d (SOld) in a non-contact state with the inside (inner peripheral surface) of the pot 50c (501c).

Further, the first temperature adjustment part 32 according to the first embodiment includes three temperature adjustment core units. FIGS. 9 and 10 illustrate one of the three temperature adjustment core units. The first temperature adjustment part 321 according to the second embodiment includes four temperature adjustment core units. In FIGS. 9 and 10, two of the four temperature adjustment core units are illustrated. Each temperature adjustment core member 51 (511) includes a core member 51a (511a) and a rod member 51b (511b). The core member 51a (511a) and the rod member 51b (511b) have a hollow structure through which air can flow.

When the housing member 50 (501) is conveyed to the first transfer position TA or the second transfer position TB, as illustrated in FIG. 10, the elevating mechanism 50f(501f) lowers the preform support plate 50d (SOld). Accordingly, the preform is lowered, the body portion and the bottom portion of the preform are disposed inside the pot 50c, and the preform is disposed at a position at which the temperature adjustment by the housing member 50 (501) can be performed.

In addition, the temperature adjustment core member 51 (511) disposed above the housing member 50 (501) at each transfer position is lowered. Accordingly, the core member 51a (511a) comes into contact with the neck portion of the preform, and the rod member 51b (511b) is disposed inside the preform. The number of the temperature adjustment core members 51 (511) that are simultaneously elevated may be set to an optional value which is one or more.

As described above, the internal pressure of the preform is increased due to the air injected from the temperature adjustment core member 51 (511), and the outer peripheral surface of the preform uniformly and closely contacts the inner peripheral surface of the pot 50c (501c). In this state, the temperature adjustment from the inside of the preform is performed by causing air to convect in the preform.

As illustrated in FIG. 9, the temperature adjustment core member 51 (511) may include a heating member 51c (511c). The heating member 51c (511c) is provided to locally heat a position immediately below the neck portion of the preform or a position of the injection molding mold that is in contact with the neck mold. By locally heating the position immediately below the neck portion, the unnecessary thickness of a shoulder portion of the resin container can be eliminated, and a thickness distribution of the entire resin container can be improved.

### Description of Advantages

FIG. 4 illustrates a reference example in which the preforms are demolded from an injection core mold 24X and housed in a housing member 50X at an injection molding position PX. That is, the housing member 50X is disposed between the injection core mold 24X and the injection cavity mold 26X which are opened, and receives the preforms. Reference numeral d1 denotes a mold opening distance of the mold required to allow the housing member 50X to enter.

According to the configurations of the embodiments, since the preforms are demolded from the injection core mold 24 (241) at the demolding position (PA, PB, and P2) different from the injection molding position P (P1), there is no need to ensure a mold opening distance for allowing the housing member 50 (501) to enter the injection molding mold 22 (221). Accordingly, since the mold opening distance can be shortened, the molding cycle time can be shortened. It is understood that a mold opening distance d illustrated in FIG. 3 is shorter than the mold opening distance d1 in the reference example illustrated in FIG. 4. In addition, since the preforms are received by the housing member 50 (501) at the demolding position (PA, PB, and P2) different from the injection molding position P (P1), a movement time to the demolding position can be used for cooling the preforms, and the injection molding of the following preforms can be started while the demolding is performed. Accordingly, the molding cycle time is further shortened.

Since the temperature adjustment part 30 (301) performs the temperature adjustment by dividing the preforms housed in the housing member 50 (501) into the third number of groups each including the second number of inj ection-molded preforms smaller than the first number, an appropriate temperature distribution can be imparted to the preforms depending on a batch of the preforms conveyed to the blow molding part 40 (401) or a waiting time until the preforms are started to be blow-molded (depending on the degree of reduction in residual heat of the preforms derived from the injection molding). Further, since the heat originally possessed by the preforms derived from the injection molding can be used to the fullest extent and the cooling or the temperature adjustment on the preforms can be kept to the minimum necessary depending on situations of the preforms (sizes of waiting time and the like).

The housing member 50 (501) includes the first housing member 50A (501A) and the second housing member 50B (501B). The first housing member 50A (501A) moves the housed preforms along the first route RA from the demolding position to the first transfer position TA at which the temperature adjustment is performed. The second housing member 50B (501B) moves the housed preforms along the second route RB from the demolding position to the second transfer position TB at which the temperature adjustment is performed. While the preforms housed in one of the first housing member 50A (501A) and the second housing member 50B (501B) are conveyed to the temperature adjustment part 30 (301) or the blow molding part 40 (401), the other of the first housing member 50A (501A) and the second housing member 50B (501B) is disposed at the demolding position and waits for reception of the preforms to be injection-molded next. According to such a configuration, even when a molding cycle is shortened as described above, it is possible to shorten or eliminate a time for the preforms used for reception to wait at the demolding position. Accordingly, the productivity of the resin containers can be improved.

For example, a hot parison type blow molding apparatus is known which includes an injection molding part, a temperature adjustment part, a blow molding part, and a take-out part, supports preforms by a conveyance mechanism (rotation plate), and intermittently conveys the preforms to each process in a rotating manner. In the apparatus, there is a method in which an injection molding time (more specifically, a cooling time after a filling time of a molten resin) is shortened or omitted, the injection molding time of the preforms as a rate-limiting stage of a molding cycle is shortened, and the preforms are cooled (temperature-adjusted) to a blow suitable temperature by a temperature adjustment part of a next process. The cooling time (temperature adjustment time) of the preforms in the temperature adjustment part is about 50% to 80% of the injection molding time of the preforms. In the apparatus, since the conveyance mechanism always supports the preforms without demolding the preforms to the take-out part, the cooling time of the preforms in the temperature adjustment part is limited to within the injection molding time at maximum. However, the manufacturing device 10 (101) according to the present disclosure includes two injection core molds and two housing members, and the preforms molded by one injection core mold are configured to be housed in one housing member. Therefore, a cooling time (temperature adjustment time) of the preforms demolded from the other injection core mold into the other housing member can be extended (excluding a machine operation time, the cooling time of the preforms can be extended, for example, up to 30 seconds + 30 seconds = 60 seconds) by an injection molding time of the one injection core mold (for example, 30 seconds). In addition, since a plurality of holder members in which the preforms temperature-controlled immediately before the blow molding part wait are provided, the flexibility is high.

The injection core mold 24 (241) includes the first injection core mold 24A(241A) and the second injection core mold 24B (241B) which are alternately combined with the injection cavity mold 26 (261). The first housing member 50A (501A) is configured to receive the preforms demolded from the first injection core mold 24A (241A). The second housing member 50B (501B) is configured to receive the preforms demolded from the second injection core mold 24B (241B).

According to such a configuration, while the preforms are demolded from one of the first injection core mold 24A (241A) and the second injection core mold 24B (241B) at the demolding position, the injection molding of the following preforms can be performed by using the other, and therefore the number of times of injection molding that can be performed per unit time can be doubled as compared with a case in which there is one injection core mold. Meanwhile, while one of the first housing member 50A (501A) and the second housing member 50B (501B) performs the temperature adjustment on the preforms received from one of the injection core molds, the other is disposed at the demolding position and receives the preforms from the other injection core mold. Therefore, even when the number of times of molding is doubled as described above, the time during which the preforms to be received wait at the demolding position can be shortened or eliminated. Therefore, the productivity of the resin containers can be further improved.

In addition, for example, since an amount of resin for forming a PET preform for a reusable resin container is large (for example, 60 g to 150 g), it takes time for cooling or temperature adjustment in the temperature adjustment part (first temperature adjustment part) as compared with a preform for a container having a capacity of 500 ml (for example, 10 g). Accordingly, by making the first housing member 50A (501A) and the second housing member 50B (501B) correspond to the first injection core mold 24A (241A) and the second injection core mold 24B (241B), respectively, even when the molding cycle is shortened as described above, while preforms are molded in one injection core mold, preforms molded by the other injection core mold and conveyed to the housing member can be sufficiently cooled or temperature-adjusted and conveyed to the blow molding part.

The housing member 50 (501) is movable in the horizontal direction between the demolding position (PA, PB, and P2) and the transfer position (TA and TB). According to such a configuration, the housing member 50 (501) can be efficiently separated from the demolding position with a minimum necessary movement.

The temperature adjustment part 30 (301) includes the temperature adjustment core member 51 (511) to be disposed inside the preforms housed in the housing member 50 (501) and configured to perform the temperature adjustment from an inside of the preforms. By enabling the temperature adjustment from the inside of the preforms, the temperature of the preforms demolded in the high-temperature state is further easily adjusted to a temperature suitable for the blow molding.

A time for injection-molding the preforms by using the injection molding mold 22 (221) includes a filling time for injecting and filling a resin material into the injection molding mold 22 (221) and a cooling time for cooling the resin material to a predetermined temperature when the resin material is injected and filled. As described above, since the time during which the injection core mold 24 (241) is moved from the injection molding position (P, P1) to the demolding position (PA, PB, P2) can be used for cooling the preforms, the cooling time can set to 1/2 or less of the filling time or zero. Accordingly, the molding cycle time is further shortened.

The blow molding part 40 (401) includes the first blow molding part 42 configured to blow-mold intermediate molded products from the preforms, and the second blow molding part 44 configured to blow-mold the resin containers from the intermediate molded products. Accordingly, reusable resin containers (returnable bottles, reusable bottles, refillable bottles) having excellent heat resistance can be manufactured. Accordingly, a burden on environment can be reduced as compared with a one-way bottle.

The temperature adjustment part 30 (301) includes the heating member 70 (701) configured to heat the preforms to be conveyed to the blow molding part 40 (401). According to such a configuration, a temperature condition of the preforms to be conveyed to the blow molding part 40 (401) can be easily adjusted to a temperature suitable for the blow molding. Accordingly, the productivity of the resin containers can be further improved.

The configurations described above are merely examples for facilitating understanding of the present disclosure. The configurations can be appropriately changed or combined without departing from the gist of the present disclosure.

For example, in the manufacturing device 101 according to the second embodiment, the injection core mold 241 includes the first injection core mold 241A and the second injection core mold 241B. However, when the amount of resin for forming the preforms is increased, the injection core mold 241 included in the injection molding mold 221 may be single. Also in this case, while the temperature adjustment is performed on the preforms housed in one of the first housing member 501A and the second housing member 501B, the injection molding of the following preforms received by the other of the first housing member 501A and the second housing member 501B can be performed. That is, since the time for performing the temperature adjustment can be increased to twice the injection molding time, it is possible to sufficiently perform the temperature adjustment on preforms having a higher weight before being conveyed to the blow molding part.

A ratio (M × N: N and N1:N2) between the number of preforms that are simultaneously injection-molded and the number of preforms that are simultaneously blow-molded can be appropriately set. In addition to 3:1 or 4:1 illustrated with reference to the first and second embodiments, 2:1 or 5:1 may be used. The number of preforms that are simultaneously blow-molded may be a number different from N or N2 exemplified with reference to the first embodiment second embodiments, for example, may be 1 or more and N or less or 1 or more and N2 or less.

Contents of Japanese Patent Application No. 2021-109598 filed on June 30, 2021 are incorporated as a part of the present disclosure.

## Claims

1. A resin container manufacturing device comprising:
an injection molding part configured to injection-mold a first number of bottomed resin preforms by using an injection molding mold, the injection molding mold comprising an injection core mold and an injection cavity mold;
a temperature adjustment part comprising a housing member configured to receive the preforms demolded from the injection core mold in a high-temperature state, the temperature adjustment part being configured to perform temperature adjustment on the preforms; and
a blow molding part configured to receive the preforms from the temperature adjustment part and blow-mold the preforms into resin containers,
wherein the injection core mold is configured to reciprocate between an injection molding position of the preforms and a demolding position of the preforms, and
wherein the temperature adjustment part is configured to perform the temperature adjustment by dividing the preforms housed in the housing member into a third number of groups, each of the third number of groups comprising a second number of preforms that is smaller than the first number.

2. The resin container manufacturing device according to claim 1,
wherein the housing member comprises:
a first housing member configured to move the housed preforms along a first route from the demolding position to a first transfer position at which the temperature adjustment is performed; and
a second housing member configured to move housed preforms along a second route different from the first route from the demolding position to a second transfer position at which the temperature adjustment is performed, and
wherein while the preforms housed in one of the first housing member and the second housing member are conveyed to the temperature adjustment part or the blow molding part, the other of the first housing member and the second housing member is disposed at the demolding position and waits for reception of the preforms to be injection-molded next.

3. The resin container manufacturing device according to claim 2,
wherein the injection core mold comprises a first injection core mold and a second injection core mold, the first injection core mold and the second injection core mold being configured to be alternately combined with the injection cavity mold,
wherein the first housing member is configured to receive the preforms demolded from the first injection core mold, and
wherein the second housing member is configured to receive the preforms demolded from the second injection core mold.

4. The resin container manufacturing device according to claim 3,
wherein the demolding position comprises:
a first demolding position at which the preforms are demolded from the first injection core mold; and
a second demolding position at which the preforms are demolded from the second injection core mold.

5. The resin container manufacturing device according to any one of claims 2 to 4,
wherein the first housing member is movable in a horizontal direction between the demolding position and the first transfer position, and
wherein the second housing member is movable in the horizontal direction between the demolding position and the second transfer position.

6. The resin container manufacturing device according to any one of claims 1 to 5,
wherein the temperature adjustment part comprises a temperature adjustment core member configured to be disposed inside the preforms housed in the housing member and perform the temperature adjustment on the preforms from an inside thereof.

7. The resin container manufacturing device according to any one of claims 1 to 6,
wherein a time for injection-molding the preforms by using the injection molding mold comprises a filling time for injecting and filling a resin material into the injection molding mold and a cooling time for cooling the resin material to reach a predetermined temperature after the injecting and filling of the resin material is completed, and
wherein the cooling time is 1/2 or less of the filling time.

8. The resin container manufacturing device according to any one of claims 1 to 7,
wherein the blow molding part comprises:
a first blow molding part configured to blow-mold intermediate molded products from the preforms; and
a second blow molding part configured to blow-mold the resin containers from the intermediate molded products.

9. The resin container manufacturing device according to any one of claims 1 to 8,
wherein the temperature adjustment part comprises a heating member configured to heat the preforms to be conveyed from the housing member to the blow molding part.

10. A resin container manufacturing method comprising:
an injection molding step of injection-molding a first number of bottomed resin preforms by using an injection molding mold, the injection molding mold comprising an injection core mold and an injection cavity mold;
a step of moving the injection core mold from an injection molding position to a demolding position;
a housing step of receiving, by a housing member, the preforms demolded from the injection core mold moved to the demolding position in a high-temperature state;
a temperature adjustment step of performing temperature adjustment by dividing the preforms housed in the housing member into a third number of groups, each of the third number of groups comprising a second number of preforms that is smaller than the first number; and
a blow molding step of receiving the preforms from the temperature adjustment part and blow-molding the preforms into resin containers.

11. The resin container manufacturing method according to claim 10,
wherein the housing member comprises:
a first housing member configured to move the housed preforms along a first route from the demolding position to a first transfer position at which the temperature adjustment is performed; and
a second housing member configured to move the housed preforms along a second route different from the first route from the demolding position to a second transfer position at which the temperature adjustment is performed, and
wherein in the housing step, while the preforms housed in one of the first housing member and the second housing member are conveyed to a position at which the temperature adjustment is performed or a position at which the blow molding is performed, the other of the first housing member and the second housing member is disposed at the demolding position and waits for reception of the preforms to be injection-molded next.

12. The resin container manufacturing method according to claim 11,
wherein the injection core mold comprises a first injection core mold and a second injection core mold, the first injection core mold and the second injection core mold being configured to be alternately combined with the injection cavity mold,
wherein the first housing member is configured to receive the preforms demolded from the first injection core mold, and
wherein the second housing member is configured to receive the preforms demolded from the second injection core mold.

13. The resin container manufacturing method according to any one of claims 10 to 12,
wherein a time for injection-molding the preforms by using the injection molding mold comprises a filling time for injecting and filling a resin material into the injection molding mold and a cooling time for cooling the resin material to reach a predetermined temperature after the injecting and filling of the resin material is completed, and
wherein the cooling time is 1/2 or less of the filling time.

14. The resin container manufacturing method according to any one of claims 10 to 13,
wherein the resin container is a polyethylene terephthalate container that is reusable by washing.
